# FASCICULE DE BREVET EUROPEEN

(11) **EP 3 512 774 B1**
(45) Date de publication et mention de la délivrance du brevet: **08.09.2021**
(21) Numéro de dépôt: 17780477.0
(22) Date de dépôt: 14.09.2017
(51) Int. Cl.: B64G 1/64

(54) **DISPOSITIF DE LIAISON À SÉPARATION COMMANDÉE PAR EFFET THERMIQUE NON PYROTECHNIQUE À TEMPS DE RÉACTION RÉDUIT**
VERBINDUNGSVORRICHTUNG MIT EINER DURCH EINEN NICHT-PYROTECHNISCHEN THERMISCHEN EFFEKT GESTEUERTEN TRENNUNG MIT REDUZIERTER REAKTIONSZEIT
CONNECTION DEVICE WITH SEPARATION CONTROLLED BY NON-PYROTECHNIC THERMAL EFFECT WITH REDUCED REACTION TIME

(30) Priorité: 14.09.2016 FR 1658593
(43) Date de publication de la demande: 24.07.2019
(73) Titulaire: ArianeGroup SAS, 75015 Paris (FR)
(72) Inventeur: ABENSUR, Thierry, 78300 Poissy (FR)
(74) Mandataire: Brevalex
(86) Numéro de dépôt international: PCT/FR2017/052457
(87) Numéro de publication internationale: WO 2018/051025

(56) Documents cités:
- EP-A1- 1 426 291
- EP-A1- 2 939 934
- WO-A1-2011/080477
- WO-A1-2015/014943
- DE-A1-102004 056 641
- JP-A- H0 727 119

## Description

### DOMAINE TECHNIQUE

La présente invention se rapporte au domaine des dispositifs de liaison à séparation commandée utilisés pour relier temporairement deux éléments de structure l'un à l'autre et permettre leur séparation sur commande.

Elle peut notamment être utilisée au sein des lanceurs spatiaux, pour la liaison structurale entre deux étages d'un lanceur spatial, ou la liaison d'une coiffe à la structure haute de lanceur spatial, ou encore la liaison entre une charge utile ou une structure porteuse intermédiaire et la structure haute d'un lanceur spatial, ou encore au sein d'un satellite, d'une sonde, d'un avion ou de tout autre engin volant, ou pour tout autre type d'application nécessitant un dispositif de liaison à séparation commandée, en particulier lorsque ce dispositif doit présenter un temps de réaction très court.

### ÉTAT DE LA TECHNIQUE ANTÉRIEURE

Dans les applications énumérées ci-dessus, les liaisons structurales séparables de manière commandée sont en général réalisées au moyen de systèmes pyrotechniques. Cette technologie a en effet prouvé son efficacité en termes de performances, de fiabilité, et de sécurité.

Toutefois, les chocs pyrotechniques inhérents à cette technique risquent d'endommager les équipements et les charges utiles. La prise en compte de ce risque dans la conception et l'utilisation de ces systèmes entraîne un surcoût important. De plus, la présence de substances pyrotechniques impose des conditions de sécurité renforcées dans les phases d'assemblage au sol, ce qui engendre un surcoût additionnel.

Pour ces raisons, des recherches ont été menées pour concevoir des dispositifs de liaison à séparation activable par un effet thermique non pyrotechnique.

Or, les dispositifs de ce type développés avant la présente invention, notamment ceux présentés dans les documents [4] et [1] de la liste bibliographique annexée à la fin de la présente description, ont révélé des performances insuffisantes pour les applications indiquées ci-dessus. En particulier, ces dispositifs ne permettent pas d'atteindre un temps de réaction de l'ordre de 20 millisecondes ou même inférieur à 20 millisecondes, pourtant requis pour de telles applications.

### EXPOSÉ DE L'INVENTION

L'invention a notamment pour but d'apporter une solution simple, économique et efficace à ce problème.

Elle propose à cet effet un dispositif de liaison à séparation commandée, comprenant une couche thermiquement frangible, deux couches de confinement thermique entre lesquelles la couche thermiquement frangible est agencée, et un élément électriquement conducteur agencé entre les deux couches de confinement thermique de manière à chauffer la couche thermiquement frangible par effet Joule lorsque l'élément électriquement conducteur est parcouru par un courant électrique.

L'invention offre ainsi un dispositif à séparation par effet thermique non pyrotechnique, qui a révélé un temps de réaction très court, par exemple de l'ordre de 10 millisecondes dans certains modes de réalisation.

La couche thermiquement frangible est une couche mince réalisée en un premier matériau ayant un point de fusion inférieur à un point de fusion d'un deuxième matériau dans lequel est réalisé l'élément électriquement conducteur.

Dans ce cas, l'élément électriquement conducteur est avantageusement une couche mince du deuxième matériau intercalée entre la couche thermiquement frangible et l'une des deux couches de confinement thermique.

De plus, le premier matériau est un alliage métallique, de préférence un eutectique.

D'une manière générale, l'élément électriquement conducteur est de préférence en contact linéaire ou surfacique avec la couche thermiquement frangible.

Outre une couche mince appliquée sur la couche thermiquement frangible, l'élément électriquement conducteur peut en variante être composé d'un circuit ou d'un câble électrique.

L'invention concerne également un assemblage de deux éléments de structure reliés temporairement au moyen d'un dispositif ou d'un ensemble de dispositifs de liaison à séparation commandée du type décrit ci-dessus, dont l'une des deux couches de confinement thermique est fixée à l'un des deux éléments de structure, tandis que l'autre couche de confinement thermique est fixée à l'autre élément de structure.

Le dispositif ou l'ensemble de dispositifs de liaison à séparation commandée s'étend de préférence autour de l'un des deux éléments de structure et est entouré par l'autre élément de structure.

Dans certains modes de réalisation de l'invention, les deux éléments de structure sont deux étages d'un lanceur spatial, ou les deux éléments de structure sont respectivement la partie haute d'un lanceur spatial et sa coiffe, ou la partie haute d'un lanceur spatial et une structure porteuse de charge utile, ou encore une structure porteuse de charge utile et une charge utile.

Dans un autre mode de réalisation de l'invention, les deux éléments de structure sont deux parties d'une vis de fixation.

L'assemblage comprend avantageusement une source d'énergie électrique et un moyen commandé de fermeture d'un circuit électrique incluant la source d'énergie électrique et l'élément électriquement conducteur.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique en coupe axiale d'un assemblage de deux éléments de structure selon un premier mode de réalisation préféré de l'invention, dans lequel les éléments de structure sont deux pièces de révolution d'un lanceur spatial ;
- la figure 2 est une vue schématique en coupe transversale de l'assemblage de la figure 1 selon le plan II-II de la figure 1 ;
- la figure 3 est une vue à plus grande échelle du détail III de la figure 1 ;
- la figure 4 est une vue en section d'un dispositif de liaison à séparation commandée qui relie l'un à l'autre les éléments de structure de l'assemblage de la figure 1 ;
- la figure 5 illustre une étape d'un procédé de fabrication du dispositif de liaison à séparation commandée de la figure 4;
- la figure 6 est une vue semblable à la figure 4, d'une variante de réalisation du dispositif de liaison à séparation commandée ;
- la figure 7 est une vue schématique en coupe axiale d'un assemblage de deux éléments de structure selon un deuxième mode de réalisation préféré de l'invention, dans lequel les éléments de structure forment une vis de fixation.

Dans l'ensemble de ces figures, des références identiques peuvent désigner des éléments identiques ou analogues. De plus, les proportions réelles ne sont pas respectées sur ces figures.

### EXPOSÉ DÉTAILLÉ DE MODES DE RÉALISATION PRÉFÉRÉS

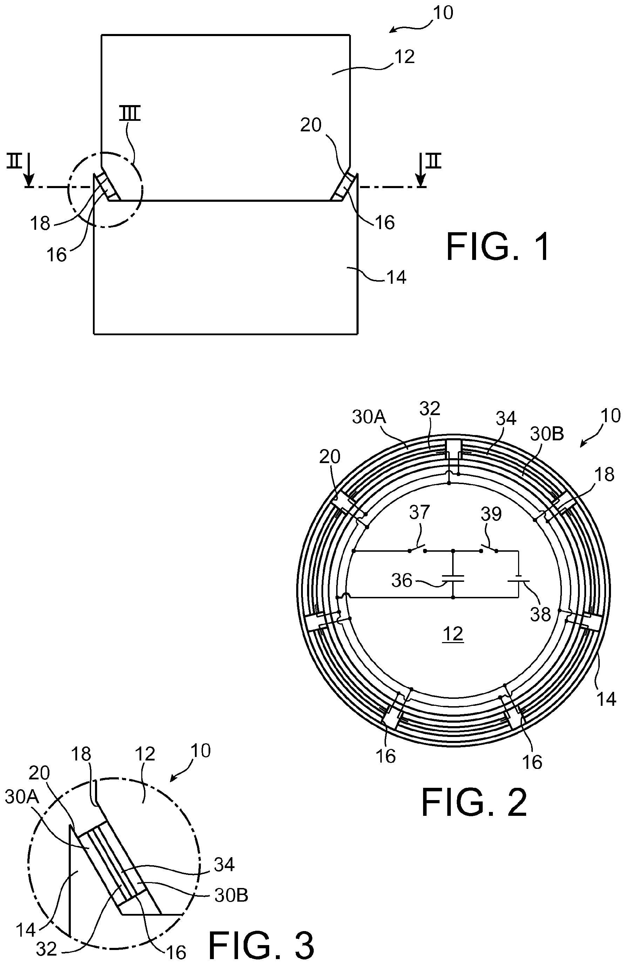

Les figures 1 à 3 illustrent un assemblage 10 de deux éléments de structure 12 et 14 selon un premier mode de réalisation préféré de l'invention. Les deux éléments de structure sont par exemple deux étages supérieurs d'un lanceur spatial et sont reliés temporairement l'un à l'autre au moyen d'un ensemble de dispositifs de liaison à séparation commandée 16.

A titre d'exemple préférentiel, les dispositifs 16 assurent l'interface entre deux surfaces de contact 18, 20 de forme tronconique appartenant respectivement aux deux éléments de structure 12 et 14. La forme tronconique des surfaces de contact 18, 20 permet de faciliter la séparation des éléments de structure 12 et 14, et en particulier d'éviter les risques de coincement au cours d'une séparation. Les dispositifs 16 prennent dans ce cas préférentiellement la forme de secteurs de tronc de cône, agencés circonférentiellement les uns à la suite des autres en étant espacés les uns des autres.

En variante, la liaison entre les éléments de structure 12 et 14 peut être assurée par un unique dispositif de liaison en forme de tronc de cône.

En variante encore, les dispositifs 16 et les surfaces de contact 18, 20 peuvent être de forme cylindrique de révolution ou en portion de cylindre de révolution, ou de toute autre forme appropriée.

Comme l'illustrent les figures 2 et 3, chaque dispositif de liaison 16 comprend, d'une manière générale, deux couches de confinement thermique 30A, 30B entre lesquelles sont agencées une couche thermiquement frangible 32 et un élément électriquement conducteur 34 destiné à chauffer la couche thermiquement frangible 32 par effet joule pour provoquer la rupture de celle-ci, comme cela apparaîtra plus clairement dans ce qui suit.

L'alimentation des éléments électriquement conducteurs 34 est de préférence assurée par un condensateur électrique 36 (ou un ensemble de tels condensateurs) raccordé en parallèle aux éléments électriquement conducteurs 34 par l'intermédiaire d'un interrupteur commandé 37, et pouvant être chargé électriquement sur commande au moyen d'une alimentation électrique 38. À cet effet, cette dernière est par exemple également raccordée au condensateur par l'intermédiaire d'un autre interrupteur commandé 39.

Le condensateur électrique 36 peut ainsi être chargé en vol. Il suffit pour cela de commander la fermeture de l'interrupteur commandé 39 qui le relie à l'alimentation électrique 38. Ainsi, lors des opérations au sol précédent le vol, le condensateur électrique 36 peut demeurer déchargé, de manière à éviter tout risque de déclenchement intempestif du processus de séparation.

Dans la terminologie de la présente invention, le condensateur électrique 36 forme ainsi une source d'énergie électrique, tandis que l'interrupteur commandé 37 forme un moyen commandé de fermeture d'un circuit électrique incluant la source d'énergie électrique et l'élément électriquement conducteur 34 de chaque dispositif de liaison 16.

Dans certains modes de réalisation de l'invention, la couche thermiquement frangible 32 est une couche mince réalisée en un premier matériau ayant un point de fusion relativement bas, tandis que l'élément électriquement conducteur 34 est une couche mince d'un deuxième matériau ayant un point de fusion plus élevé que le point de fusion du premier matériau.

Le terme « couche mince » est à comprendre selon sa définition communément admise, à savoir une couche dont l'épaisseur varie d'une fraction de nanomètre à quelques micromètres.

Dans l'exemple illustré, le premier matériau est un alliage eutectique d'or (Au) et d'étain (Sn), dont le point de fusion est de l'ordre de 300 degrés Celsius environ, tandis que le deuxième matériau est de l'or pur, dont le point de fusion est supérieur à 1000 degrés Celsius.

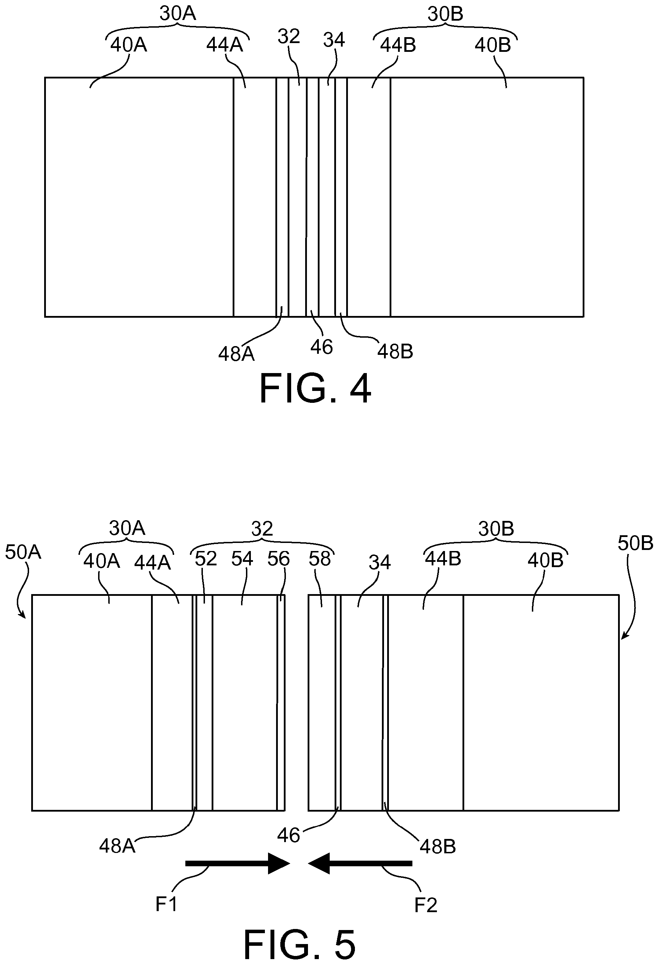

La figure 4 montre plus précisément la structure d'un dispositif de liaison à séparation commandée 16 dans un exemple de réalisation de l'invention.

Dans cet exemple, chacune des couches de confinement thermique 30A, 30B est composée de deux sous-couches, à savoir une sous-couche métallique 40A, 40B, par exemple de quelques millimètres d'épaisseur et réalisée en un alliage d'aluminium, formant une face externe du dispositif, et une sous-couche 44A, 44B d'une céramique thermiquement et électriquement isolante, telle que de la zircone yttriée (YSZ), dont l'épaisseur est comprise entre 100 et 200 micromètres environ. Les deux couches de confinement thermique 30A, 30B présentent de préférence des structures symétriques l'une de l'autre.

De plus, la couche thermiquement frangible 32 et la couche mince formant l'élément électriquement conducteur 34 sont séparées l'une de l'autre par une première couche mince formant barrière de diffusion 46, par exemple constituée de chrome (Cr), d'une épaisseur de 50 nanomètres environ. De manière analogue, la couche thermiquement frangible 32 et la couche mince formant l'élément électriquement conducteur 34 sont séparées respectivement des couches de confinement thermique 30A et 30B par des deuxième et troisième couches minces formant barrières de diffusion 48A, 48B semblables à la première couche mince 46. Les couches minces 46, 48A, 48B permettent en outre d'améliorer l'adhésion entre les autres couches formant le dispositif.

A titre d'exemple, le dispositif de liaison à séparation commandée 16 décrit ci-dessus peut être obtenu au moyen d'un procédé comprenant les étapes consistant, d'une part, à réaliser une première structure composite 50A (figure 5), d'autre part, à réaliser une deuxième structure composite 50B (figure 5), puis à assembler les deux structures 50A et 50B de manière à obtenir le dispositif 16 (figure 4).

Plus précisément, l'étape de formation de la première structure composite 50A comporte les sous-étapes consistant à :
- former la sous-couche 44A de céramique thermiquement et électriquement isolante sur la sous-couche métallique 40A (figure 5), par exemple par la technique EPD (dépôt par électrophorèse) ; puis
- former la deuxième couche mince formant barrière de diffusion 48A sur la sous-couche précédente 44A, par exemple par PVD (dépôt physique par phase vapeur) ; puis
- former successivement, sur la couche précédente 48A, une couche mince d'or 52, de 150 nanomètres d'épaisseur environ, puis une couche mince d'étain 54, de 1,55 micromètre d'épaisseur environ, puis une couche mince d'or 56, de 50 nanomètres d'épaisseur environ.

L'étape de formation de la deuxième structure composite 50B comporte les sous-étapes consistant à :
- former la sous-couche 44B de céramique thermiquement et électriquement isolante sur la sous-couche métallique 40B, par exemple par EPD ; puis
- former la troisième couche mince formant barrière de diffusion 48B sur la sous-couche précédente 44B, par exemple par PVD ; puis
- former successivement, sur la couche précédente 48B, la couche mince formant l'élément électriquement conducteur 34, de 1 micromètre d'épaisseur environ, puis la première couche mince formant barrière de diffusion 46, puis une couche mince d'or 58, de 300 nanomètres d'épaisseur environ.

Dans ce cas, l'étape d'assemblage des deux structures composites 50A et 50B est réalisée par thermocompression : les deux structures sont mises côte-à-côte de manière à appliquer la couche d'or 58 de la deuxième structure sur la couche d'or 56 de la première structure, puis une pression de 7 MPa environ est appliquée pendant 60 minutes environ sous une température de 310 degrés Celsius environ, comme l'illustrent les flèches F1 et F2 (figure 5), selon la méthode décrite dans le document [2] de la liste bibliographique annexée à la fin de la présente description. Cette méthode permet de transformer le sandwich comprenant les couches 52, 54, 56, 58 en un alliage homogène comprenant 54% d'étain et 46% d'or (en pourcentages massiques), dans lequel la principale espèce chimique est AuSn2. Cet alliage homogène forme la couche thermiquement frangible 32. Cette dernière est ainsi notamment capable de résister à un effort de cisaillement de 64 MPa, et donc aux niveaux d'efforts rencontrés dans les applications mentionnées ci-dessus.

La fixation de chaque dispositif de liaison à séparation commandée 16 sur les éléments de structure 12 et 14 peut être réalisée de manière conventionnelle et ne sera pas décrite en détail ici. À titre indicatif, cette fixation peut par exemple être réalisée par boulonnage de chacune des sous-couches métalliques 40A, 40B sur l'élément de structure correspondant 14, 12.

En fonctionnement, la séparation des éléments de structure 12 et 14 est déclenchée en faisant circuler un courant électrique au sein de l'élément électriquement conducteur 34 de chaque dispositif de liaison à séparation commandée 16. Dans l'exemple illustré, il s'agit ainsi de fermer l'interrupteur commandé 37 de sorte que le condensateur électrique 36, préalablement chargé, génère un courant électrique au sein de chaque élément électriquement conducteur 34, qui chauffe ainsi par effet joule. La chaleur générée se propage par conduction thermique au sein de la couche thermiquement frangible 32 adjacente, tout en étant confinée entre les deux couches de confinement thermique 30A, 30B correspondantes. Dans l'exemple illustré, puisque la couche thermiquement frangible 32 est en un matériau électriquement conducteur, le courant électrique se propage également dans la couche thermiquement frangible 32 par conduction électrique et provoque un échauffement additionnel de cette dernière par effet joule.

Dans tous les cas, la température de la couche thermiquement frangible 32 augmente très rapidement au-delà de la température de fusion du premier matériau constituant ladite couche, ce qui provoque la rupture de la couche thermiquement frangible 32. L'intégrité de l'élément électriquement conducteur 34 est conservée du fait que la température de fusion du deuxième matériau qui le constitue est supérieure à celle du premier matériau. Dans l'exemple illustré, la différence entre les températures de fusion respectives des premier et deuxième matériaux est ainsi supérieure à 700 degrés Celsius.

La rupture de la couche thermiquement frangible 32 provoque la séparation des deux éléments de structure 12 et 14. Dans l'exemple illustré, cette séparation est effective en moins de 10 millisecondes à partir de l'ordre de séparation, dans des conditions nominales d'utilisation, typiquement sous une température comprise entre -40 degrés Celsius et 70 degrés Celsius, et sous une pression comprise entre 0 bar et 1 bar.

Bien entendu, d'autres configurations du dispositif 16 sont possibles dans le cadre de la présente invention.

Ainsi, les couches de confinement thermique 30A, 30B peuvent être chacune composée d'un matériau céramique structural électriquement et thermiquement isolant, par exemple le matériau commercialisé par Corning Inc. sous la dénomination MACOR (marque déposée), au lieu de l'empilement de sous-couches décrit ci-dessus.

De plus, la couche thermiquement frangible 32 peut être réalisée en un autre alliage métallique que celui décrit ci-dessus, ou en un autre type de matériau.

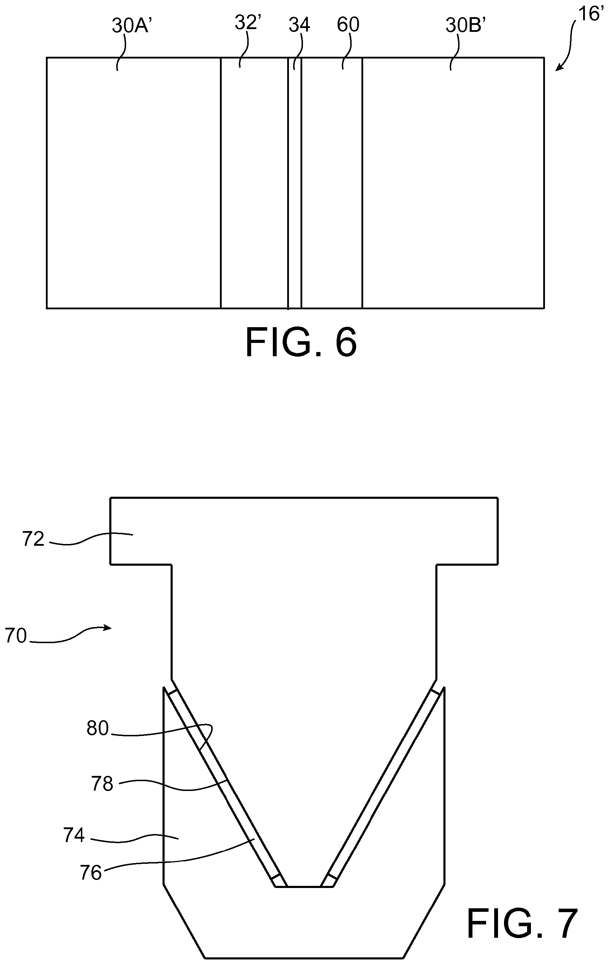

La figure 6 décrit ainsi un exemple illustratif pas couvert par les revendications d'un dispositif de liaison à séparation commandée 16', dans lequel la couche thermiquement frangible 32' est réalisée en une résine adhésive chargée de particules qui se dilatent sous l'effet de la chaleur de manière à provoquer une rupture de la couche thermiquement frangible 32'. Une telle résine est par exemple connue du document [3] de la liste bibliographique ci-dessous.

Dans l'exemple illustré sur la figure 6, le dispositif 16' comprend ainsi une couche de confinement thermique 30A' de quelques millimètres d'épaisseur, la couche thermiquement frangible 32' en résine Epoxy chargée, présentant une épaisseur de l'ordre de 100 micromètres, la couche mince formant l'élément électriquement conducteur 34 semblable à celle décrite ci-dessus, une couche de colle Epoxy conventionnelle 60 présentant une épaisseur de l'ordre de 100 micromètres, puis l'autre couche de confinement thermique 30B' semblable à la couche de confinement thermique 30A'.

En variante encore, l'élément électriquement conducteur 34 peut se présenter sous une forme différente de la couche décrite ci-dessus, par exemple sous la forme d'un circuit électrique ou d'un câble électrique, noyé dans une couche de matière thermiquement conductrice agencée en contact avec la couche thermiquement frangible 32 ou 32', ou noyé directement dans la couche thermiquement frangible 32 ou 32'.

D'une manière générale, il est préférable que l'élément électriquement conducteur 34 soit distinct de la couche thermiquement frangible 32, 32' de sorte que l'élément électriquement conducteur continue de fonctionner de manière optimale au moins jusqu'à la rupture complète de la couche thermiquement frangible.

Toutefois, dans certains modes de réalisation de l'invention, l'élément électriquement conducteur 34 peut être constitué de la couche thermiquement frangible elle-même, pourvu que cette dernière soit constituée d'un matériau électriquement conducteur.

La figure 7 illustre un assemblage 70 de deux éléments de structure 72 et 74 reliés temporairement au moyen d'un dispositif de liaison à séparation commandée 76 du type décrit ci-dessus, l'assemblage formant, selon un deuxième mode de réalisation préféré de l'invention, une vis de fixation. L'un des éléments de structure 72 forme ainsi la tête et une partie de la tige de la vis de fixation tandis que l'autre élément de structure 74 forme le reste de la tige.

Les deux éléments de structure 72, 74 présentent des surfaces de contact respectives 78, 80 de forme tronconique entre lesquelles est intercalé le dispositif de liaison à séparation commandée 76, qui est par exemple de forme tronconique également. Le dispositif 76 s'étend ainsi autour d'une portion d'extrémité de l'élément de structure 72. Le dispositif 76 intègre bien entendu des moyens de connexion électrique (non visibles sur la figure) pour permettre le passage d'un courant électrique au travers de l'élément électriquement conducteur du dispositif, d'une manière analogue à ce qui est décrit ci-dessus.

La fabrication et le fonctionnement de l'assemblage 70 sont semblables à la fabrication et au fonctionnement de l'assemblage 10 décrit ci-dessus.

### BILBIOGRAPHIE

[1] : M.H. Lucy et al., 'Report on Alternative Devices to Pyrotechnies on Spacecraft', 10th annual AIAA/USU Conférence on Small Satellites, Utah State University, Logan, UT 84341-1942, September 1996
[2] : Fang Zhiqiang, 'Low temperature Sn-rich Au-Sn wafer-level bonding', Journal of Semiconductors, Vol. 34, N°10, October 2013
[3] : Marie-Pierre Foulc, *'Assembly of two substrates bonded by a rigid polymer, and methods for assembly and dismantling, by means of migration of said bonded assembly',* WO 2011/080477 A1
[4]: Horie Youichi, 'Separation mechanism for space structure', EP 2939934 A1

## Revendications

1. Dispositif de liaison à séparation commandée (16), comprenant une couche thermiquement frangible (32), deux couches de confinement thermique (30A, 30B) entre lesquelles la couche thermiquement frangible est agencée, et un élément électriquement conducteur (34) agencé entre les deux couches de confinement thermique de manière à chauffer la couche thermiquement frangible par effet joule lorsque l'élément électriquement conducteur est parcouru par un courant électrique, dans lequel la couche thermiquement frangible (32) est réalisée en un premier matériau ayant un point de fusion inférieur à un point de fusion d'un deuxième matériau dans lequel est réalisé l'élément électriquement conducteur (34), **caractérisé en ce que** la couche thermiquement frangible (32) est une couche mince d'un alliage métallique constituant le premier matériau.

2. Dispositif de liaison à séparation commandée selon la revendication 1, dans lequel l'élément électriquement conducteur (34) est une couche mince du deuxième matériau intercalée entre la couche thermiquement frangible (32) et l'une des deux couches de confinement thermique (30B).

3. Dispositif de liaison à séparation commandée selon l'une quelconque des revendications 1 et 2, dans lequel l'élément électriquement conducteur (34) est en contact linéaire ou surfacique avec la couche thermiquement frangible (32).

4. Assemblage (10, 70) de deux éléments de structure (12, 14; 72, 74) reliés temporairement au moyen d'un dispositif ou d'un ensemble de dispositifs de liaison à séparation commandée (16') selon l'une quelconque des revendications 1 à 3, dont l'une des deux couches de confinement thermique (30A) est fixée à l'un des deux éléments de structure (12; 72), tandis que l'autre couche de confinement thermique (30B) est fixée à l'autre élément de structure (14 ; 74).

5. Assemblage selon la revendication 4, dans lequel le dispositif ou l'ensemble de dispositifs de liaison à séparation commandée (16) s'étend autour de l'un des deux éléments de structure (12 ; 72) et est entouré par l'autre élément de structure (14; 74).

6. Assemblage selon la revendication 4 ou 5, dans lequel les deux éléments de structure (12, 14) sont deux étages d'un lanceur spatial, ou les deux éléments de structure sont respectivement la partie haute d'un lanceur spatial et sa coiffe, ou la partie haute d'un lanceur spatial et une structure porteuse de charge utile, ou encore une structure porteuse de charge utile et une charge utile.

7. Assemblage selon la revendication 4 ou 5, dans lequel les deux éléments de structure (72, 74) sont deux parties d'une vis de fixation.

8. Assemblage selon l'une quelconque des revendications 4 à 7, comprenant une source d'énergie électrique (36) et un moyen commandé (37) de fermeture d'un circuit électrique incluant la source d'énergie électrique et l'élément électriquement conducteur (34) du ou de chaque dispositif de liaison à séparation commandée (16).

## Patentansprüche

1. Vorrichtung zum Verbinden mit steuerbarer Abtrennung (16), enthaltend eine thermisch abreißbare Schicht (32), zwei thermische Hüllschichten (30A, 30B), zwischen denen die thermisch abreißbare Schicht angeordnet ist, und ein elektrisch leitendes Element (34), das zwischen den beiden thermischen Hüllschichten angeordnet ist, um die thermisch abreißbare Schicht durch Joule-Effekt zu erhitzen, wenn das elektrisch leitende Element von einem elektrischen Strom durchflossen wird, wobei die thermisch abreißbare Schicht (32) aus einem ersten Material hergestellt ist, das einen Schmelzpunkt hat, der niedriger ist als ein Schmelzpunkt eines zweiten Materials, aus dem das elektrisch leitende Element (34) hergestellt ist, **dadurch gekennzeichnet, dass** die thermisch abreißbare Schicht (32) eine dünne Schicht aus einer Metalllegierung ist, aus der das erste Material besteht.

2. Vorrichtung zum Verbinden mit steuerbarer Abtrennung nach Anspruch 1, wobei das elektrisch leitende Element (34) eine dünne Schicht aus dem zweiten Material ist, die zwischen der thermisch abreißbaren Schicht (32) und einer der beiden thermischen Hüllschichten (30B) eingefügt ist.

3. Vorrichtung zum Verbinden mit steuerbarer Abtrennung nach Anspruch 1 oder 2, wobei das elektrisch leitende Element (34) in Linien- oder Flächenkontakt mit der thermisch abreißbaren Schicht (32) steht.

4. Anordnung (10, 70) aus zwei Strukturelementen (12, 14; 72, 74), die mittels einer Vorrichtung oder einem Satz von Vorrichtungen zum Verbinden mit steuerbarer Abtrennung (16') nach einem der Ansprüche 1 bis 3 vorübergehend verbunden sind, von denen eine der beiden thermischen Hüllschichten (30A) an einem der beiden Strukturelemente (12; 72) befestigt ist, während die andere thermische Hüllschicht (30B) an dem anderen Strukturelement (14; 74) befestigt ist.

5. Anordnung nach Anspruch 4, wobei sich die Vorrichtung oder der Satz von Vorrichtungen zum Verbinden mit steuerbarer Abtrennung (16) um eines der beiden Strukturelemente (12; 72) herum erstreckt und von dem anderen Strukturelement (14; 74) umgeben ist.

6. Anordnung nach Anspruch 4 oder 5, wobei die beiden Strukturelemente (12, 14) zwei Stufen einer Raumträgerrakete sind oder die beiden Strukturelemente jeweils der obere Teil einer Raumträgerrakete bzw. ihre Verkleidung oder der obere Teil einer Raumträgerrakete und eine Nutzlast tragende Struktur oder eine Nutzlast tragende Struktur und eine Nutzlast sind.

7. Anordnung nach Anspruch 4 oder 5, wobei die beiden Strukturelemente (72, 74) zwei Teile einer Befestigungsschraube sind.

8. Anordnung nach einem der Ansprüche 4 bis 7, enthaltend eine elektrische Stromquelle (36) und eine steuerbare Einrichtung (37) zum Schließen eines elektrischen Stromkreises, der die elektrische Stromquelle und das elektrisch leitende Element (34) der bzw. jeder Vorrichtung zum Verbinden mit steuerbarer Abtrennung (16) umfasst.

## Claims

1. A controlled-separation connection device (16), comprising a thermally frangible layer (32), two thermal confinement layers (30A, 30B) between which the thermally frangible layer is arranged, and an electrically conductive element (34) arranged between the two thermal confinement layers so as to heat the thermally frangible layer by Joule effect when the electrically conductive element carries an electric current, wherein the thermally frangible layer (32) is made of a first material having a melting point lower than a melting point of a second material in which the electrically conductive element (34) is provided, **characterized in that** the thermally frangible layer (32) is a thin layer of a metal alloy constituting the first material.

2. The controlled-separation connection device according to claim 1, wherein the electrically conductive element (34) is a thin layer of the second material interposed between the thermally frangible layer (32) and one of the two thermal confinement layers (30B).

3. The controlled-separation connection device according to any one of claims 1 and 2, wherein the electrically conductive element (34) is in linear or surface contact with the thermally frangible layer (32).

4. An assembly (10, 70) of two structural elements (12, 14; 72, 74) temporarily connected by means of a controlled-separation connection device or a set of controlled-separation connection devices (16) according to any one of claims 1 to 3, one of the two thermal confinement layers (30A) of which is attached to one of the two structural elements (12; 72), while the other thermal confinement layer (30B) is attached to the other structural element (14; 74).

5. The assembly according to claim 4, wherein the controlled-separation connection device or the set of controlled-separation connection devices (16) extends around one of the two structural elements (12; 72) and is surrounded by the other structural element (14; 74).

6. The assembly according to claim 4 or 5, wherein the two structural elements (12, 14) are two stages of a space launch vehicle, or the two structural elements are respectively the upper part of a space launch vehicle and its fairing, or the upper part of a space launch vehicle and a payload bearing structure, or a payload bearing structure and a payload.

7. The assembly according to claim 4 or 5, wherein the two structural elements (72, 74) are two parts of a fastening screw.

8. The assembly according to any one of claims 4 to 7, comprising an electrical power supply (36) and controlled means (37) for closing an electrical circuit including the electrical power supply and the electrically conductive element (34) of the or each controlled-separation connection device (16).
